# EUROPÄISCHE PATENTSCHRIFT

(11) **EP 3 918 282 B1**
(45) Veröffentlichungstag und Bekanntmachung des Hinweises auf die Patenterteilung: **21.02.2024**
(21) Anmeldenummer: 19805165.8
(22) Anmeldetag: 11.11.2019
(51) Int. Cl.: G01D 21/00

(54) **ABNEHMBARES ANZEIGE- UND BEDIENMODUL FÜR EIN MESSGERÄT**
REMOVABLE DISPLAY AND CONTROL MODULE FOR A FIELD DEVICE
MODULE AMOVIBLE DE VISUALISATION ET DE CONTROLE POUR UN APPAREIL DE TERRAIN

(30) Priorität: 01.02.2019 DE 102019201320
(43) Veröffentlichungstag der Anmeldung: 08.12.2021
(73) Patentinhaber: VEGA Grieshaber KG, 77709 Wolfach (DE)
(72) Erfinder: DECK, Thomas, 77709 Wolfach (DE); RAUER, Winfried, 77716 Fischerbach (DE); MOTZER, Jürgen, 77723 Gengenbach (DE); STAIGER, Holger, 78739 Hardt (DE)
(74) Vertreter: Maiwald GmbH
(86) Internationale Anmeldenummer: PCT/EP2019/080796
(87) Internationale Veröffentlichungsnummer: WO 2020/156697

(56) Entgegenhaltungen:
- EP-A1- 2 829 929
- DE-A1-102012 012 430
- DE-U1-202009 008 054
- US-A1- 2003 198 008

## Beschreibung

### Gebiet der Erfindung

Die Erfindung betrifft ein abnehmbares Anzeige- und Bedienmodul für ein Feldgerät sowie ein Feldgerät mit einem derartigen Anzeige- und Bedienmodul.

### Hintergrund

Anzeige- und Bedienmodule von Messgeräten, die im Folgenden auch als Feldgeräte bezeichnet werden, sind im Regelfall an dem Feldgerät angebracht und mit diesen über ein Kabel, Steckkontakte oder Schleifkontakte verbunden. Über dieses Kabel werden die Energieversorgung und die Kommunikation zwischen dem Feldgerät und dem Anzeige- und Bedienmodul betrieben.

US 2033/0198008 A1 beschreibt einen Computer mit einem abnehmbaren drahtlosen, unabhängig betreibbaren Computer.

DE 10 2012 012 430 A1 beschreibt eine Steuervorrichtung für ein Feldgerät sowie ein System und ein Verfahren zur Inbetriebnahme eines Feldgeräts.

DE 20 2009 008 054 U1 beschreibt ein modulares Kontrollsystem für fluidische Steuergeräte.

EP 2 829 929 A1 beschreibt ein Feldgerät mit einem trennbaren Anzeige- und/oder Bedienmodul.

### Zusammenfassung

Es ist eine Aufgabe der vorliegenden Erfindung, ein alternatives Anzeige- und Bedienmodul für ein Messgerät zur Prozessautomatisierung im industriellen Umfeld bereitzustellen.

Diese Aufgabe wird durch den Gegenstand des unabhängigen Anspruchs gelöst. Weiterbildungen der Erfindung ergeben sich aus den Unteransprüchen und der folgenden Beschreibung.

Ein erster Aspekt der Erfindung betrifft ein abnehmbares Anzeige- und Bedienmodul für ein Messgerät (Feldgerät). Bei dem Messgerät kann es sich beispielsweise um ein Füllstandmessgerät, beispielsweise ein Füllstandradar, ein Grenzstanderfassungsgerät (Grenzstandsensor), ein Durchflussmessgerät oder ein Druckmessgerät handeln.

Das abnehmbare Anzeige- und Bedienmodul weist einen Energiespeicher auf, der zur Energieversorgung des Anzeige- und Bedienmoduls eingerichtet ist, wenn das Anzeige- und Bedienmodul vom Feldgerät entfernt ist und nicht durch ein Kabel mit dem Feldgerät verbunden ist.

Der Energiespeicher und die Schaltung des Moduls können hierbei so dimensioniert und eingerichtet sein, dass eine Funkenbildung außerhalb des Moduls unwahrscheinlich oder gar unmöglich ist. Je kleiner der Energiespeicher ist, desto geringer mag die Gefahr einer Funkenbildung sein. Grundsätzlich kann es vorteilhaft sein, die Batterie so klein wie möglich für einen Ex-Schutz zu dimensionieren. Aktuell kann für Bluetooth-Kommunikation eine Kapazität von 3 mWh für 15 Minuten vorgesehen sein.

Weiterhin ist eine Energieversorgungsschnittstelle vorgesehen, die zur Energieversorgung des Anzeige- und Bedienmoduls eingerichtet ist, wenn das Anzeige- und Bedienmodul auf das Feldgerät aufgesetzt, aufgeschraubt oder darin angeordnet, also eingelegt oder eingeschoben ist.

Darüber hinaus ist eine Funkschnittstelle vorhanden, die eingerichtet ist zur drahtlosen Kommunikation mit dem Feldgerät, und insbesondere zum Empfangen von Anzeigedaten von dem Feldgerät und zum Übertragen von Parametrierdaten an das Feldgerät. Die Funkschnittstelle ist beispielsweise eine Nahbereichskommunikationsschnittstelle, wie Bluetooth oder ZigBee.

Zusätzlich ist ein Datenspeicher für die Speicherung von Parametrierdaten für das Feldgerät vorhanden, sowie eine Steuerschaltung, welche eingerichtet ist, dass die Parametrierdaten im Anzeige- und Bedienmodul zwischengespeichert werden und erst beim Wiederverbinden des Anzeige- und/oder Bedienmoduls mit dem Feldgerät in dieses übertragen und dort gespeichert werden.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Das Anzeige- und Bedienmodul weist insbesondere eine Benutzerschnittstelle auf, über welche der Benutzer Parametrierdaten eingeben kann, die dann an eine entsprechende Steuereinheit des Feldgeräts übertragen werden. Auch kann das Anzeige- und Bedienmodul ein Display aufweisen, mithilfe dessen Anzeigedaten, insbesondere Messdaten des Feldgeräts, dem Benutzer angezeigt werden können.

Gemäß einer Ausführungsform der Erfindung weist das abnehmbare Anzeige- und Bedienmodul eine Steuerschaltung auf, die eingerichtet ist zur Unterbindung einer Energieversorgung des Anzeige- und Bedienmoduls durch den Energiespeicher, wenn das Anzeige- und Bedienmodul auf das Feldgerät aufgesetzt oder darin angeordnet ist. Der Begriff Steuerschaltung ist breit auszulegen.

Gemäß einer weiteren Ausführungsform der Erfindung weist das Anzeige- und Bedienmodul eine drahtgebundene Kommunikationsschnittstelle auf, die eingerichtet ist zur drahtgebundenen Kommunikation mit dem Feldgerät, und insbesondere zum Empfangen von Anzeigedaten von dem Feldgerät und zum Übertragen von Parametrierdaten an das Feldgerät, wenn das Anzeige- und Bedienmodul auf das Feldgerät aufgesetzt oder darin angeordnet ist.

Es kann vorgesehen sein, dass ausschließlich die drahtgebundene Kommunikationsschnittstelle verwendet wird, wenn das Anzeige- und Bedienmodul auf das Feldgerät aufgesetzt oder darin angeordnet ist. In diesem Falle wird die Funkschnittstelle nicht verwendet.

Auch kann vorgesehen sein, dass die drahtgebundene Kommunikationsschnittstelle zusätzlich zur Funkschnittstelle verwendet wird, wenn das Anzeige- und Bedienmodul auf das Feldgerät aufgesetzt oder darin angeordnet ist. In diesem Fall können die vom Feldgerät an das Anzeige- und Bedienmodul übermittelten Daten gleichzeitig an ein externes, entferntes Gerät übertragen werden.

Gemäß einer weiteren Ausführungsform der Erfindung entspricht die drahtgebundene Kommunikationsschnittstelle der Energieversorgungsschnittstelle. Beispielsweise handelt es sich hierbei um eine Zweidrahtleitung, über welche sowohl Daten als auch Energie übertragen werden kann.

Gemäß einer weiteren Ausführungsform der Erfindung ist das Anzeige- und Bedienmodul, und insbesondere die Funkschnittstelle, ausschließlich zur Nahbereichskommunikation eingerichtet ist, was auch aus Gründen der Datensicherheit von Vorteil sein kann. Hierdurch kann sichergestellt werden, dass die Sendeleistung stark begrenzt ist. Dies kann sich zur Bereitstellung eines Ex-Schutzes als vorteilhaft erweisen.

Gemäß einer weiteren Ausführungsform der Erfindung ist das Anzeige- und Bedienmodul, und insbesondere die Funkschnittstelle, zur drahtlosen Kommunikation mit einem weiteren Feldgerät, zum Empfangen von Anzeigedaten von dem weiteren Feldgerät und zum Übertragen von Parametrierdaten an das weitere Feldgerät eingerichtet ist. Somit kann der Benutzer bedarfsweise nach Abnahme des Anzeige- und Bedienmoduls vom Feldgerät auch mit anderen Feldgeräten kommunizieren.

Ein weiterer Aspekt der Erfindung betrifft ein Feldgerät mit einem oben und im Folgenden beschriebenen abnehmbaren Anzeige- und Bedienmodul.

Gemäß einer weiteren Ausführungsform weist das Feldgerät eine Öffnung zur Aufnahme des Anzeige- und Bedienmoduls auf.

Alternativ kann vorgesehen sein, dass das Anzeige- und Bedienmodul auf das Feldgerät aufgesetzt oder darauf aufgeschraubt wird.

Gemäß einer weiteren Ausführungsform der Erfindung weist das Feldgerät einen Feldgerätedeckel auf, der zur Aufnahme des Anzeige- und Bedienmoduls eingerichtet ist.

Im Feldgerätedeckel oder dem Gehäuse des Feldgeräts kann ein Hohlraum vorgesehen sein, in welchen das Anzeige- und Bedienmodul eingeschoben wird.

Die Steuerschaltung des Anzeige- und Bedienmoduls kann eingerichtet sein, zu erkennen, ob sich das Anzeige- und Bedienmodul entfernt vom Feldgerät befindet oder auf dieses aufgesetzt oder darin angeordnet ist.

Der Feldgerätedeckel kann ausgeführt sein, bei aufgesetztem oder darin angeordnetem Anzeige- und Bedienmodul eine Bedienung des Anzeige- und Bedienmoduls durch einen Benutzer zu ermöglichen. Hierfür kann ein transparentes Glas- oder Kunststofffenster vorgesehen sein, unter dem sich das Anzeige- und Bedienmodul befindet.

Ein weiterer Aspekt der Erfindung betrifft die Verwendung eines oben und im Folgenden beschriebenen abnehmbaren Anzeige- und Bedienmoduls zur drahtlosen Bedienung eines Feldgeräts und zur drahtgebundenen Energieversorgung durch das Feldgerät.

Im Folgenden werden mit Verweis auf die Figuren Ausführungsformen beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

Kurze Beschreibung der Figuren
Fig. 1 zeigt ein Feldgerät mit eingesetztem Anzeige- und Bedienmodul.
Fig. 2 zeigt das Feldgerät der Fig. 1 mit entfernt angeordnetem Anzeige- und Bedienmodul.

### Detaillierte Beschreibung von Ausführungsformen

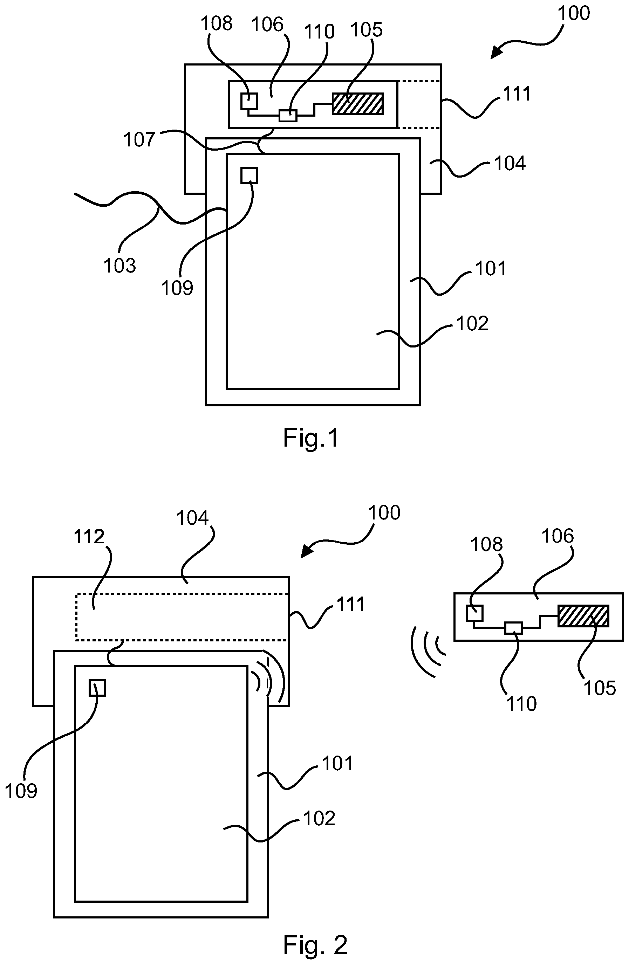

Fig. 1 zeigt ein Feldgerät 100 mit einem im Feldgerätedeckel 104 eingeschobenen Anzeige- und Bedienmodul 106. Zum Einschieben des Anzeige- und Bedienmoduls 106 ist eine Öffnung 111 im Feldgerätedeckel vorgesehen.

Der Feldgerätedeckel 104 ist beispielsweise auf das Feldgerätegehäuse 101 aufgeschraubt. Im Feldgerätegehäuse 101 befindet sich die Feldgeräteelektronik 102, beispielsweise eine Messelektronik zur Füllstandmessung, Grenzstanderfassung, Durchflussmessung oder Druckmessung. Insbesondere weist sie eine Funkschnittstelle 109 auf, über welche die Feldgeräteelektronik mit dem Anzeige- und Bedienmodul 106 kommunizieren kann.

Hierfür weist das Anzeige- und Bedienmodul 106 eine entsprechende Funkschnittstelle 108 auf, die mit der Steuerschaltung 110 verbunden ist. Es ist ein Energiespeicher 105 vorgesehen, beispielsweise in Form einer Kapazität und/oder einer Batterie, der ebenfalls mit der Steuerschaltung 110 verbunden ist.

Über die drahtgebundene Energieversorgungsschnittstelle 107 kann das Anzeige- und Bediengerät 106, und insbesondere der Energiespeicher 105 mit Energie von der Feldgeräteelektronik versorgt werden, wenn das Anzeige- und Bediengerät 106 am Feldgerät angebracht oder darin angeordnet ist.

Zur Energieversorgung der Feldgeräteelektronik ist die Versorgungsleitung 103 vorgesehen. Hierbei kann es sich insbesondere um eine Zweidrahtleitung in Form einer 4...20 mA-Schnittstelle handeln, über welche das Feldgerät auch Daten austauschen kann.

Fig. 2 zeigt das Feldgerät der Fig. 1, wobei hier das Anzeige- und Bedienmodul 106 entfernt angeordnet ist. Über die Funkschnittstelle 108 kann es drahtlos mit der Funkgeräteschnittstelle 109 der Feldgeräteelektronik kommunizieren und wird hierbei durch den Energiespeicher 105 mit der dafür erforderlichen Energie versorgt.

Das Anzeige- und Bedienmodul 106 kann eine zusätzliche Energieversorgungsschnittstelle aufweisen (nicht dargestellt), über welche es an eine externe Energieversorgung angeschlossen werden kann, auch wenn es nicht mit dem Feldgerät verbunden bzw. darin eingesetzt ist.

Bezugszeichen 112 zeigt den Hohlraum im Feldgerätedeckel 104, der zur Aufnahme des Anzeige- und Bedienmoduls 106 eingerichtet ist.

Da es je nach Einbausituation mühsam sein kann, sämtliche Einstellungen direkt am Feldgerät zu tätigen, kann hierfür das Anzeige- und Bedienmodul 106 entfernt werden, so dass eine "ferngesteuerte", drahtlose Parametrierung und Anzeigenablesung stattfinden kann.

Das Anzeige- und Bedienmodul verfügt über einen Energiespeicher 105 und eine drahtlose Verbindung zum Feldgerät 100.

Ist das Anzeige- und Bedienmodul 106 auf das Feldgerät aufgesteckt oder darin eingeschoben, wird der Energiespeicher 105 durch dieses geladen (drahtgebundenes Laden). Die Kommunikation zwischen Feldgerät und Anzeige- und Bedienmodul kann im aufgesteckten Modus per Funk, aber auch drahtgebunden vorgesehen sein.

Wird das Anzeige- und Bedienmodul 106 vom Feldgerät 100 abgenommen und ist nicht mehr durch ein Kabel mit dem Feldgerät verbunden, versorgt der Energiespeicher 105 das Anzeige- und Bedienmodul 106 und die Kommunikation mit dem Feldgerät 100 verläuft ausschließlich drahtlos.

Die Parametrierung des Feldgeräts kann somit in deutlich einfacherer Umgebung erfolgen. Insbesondere kann das Anzeige- und Bedienmodul als Messwertanzeiger drahtlos, entfernt vom Feldgerät betrieben werden, um den Messwert zum Beispiel bei Änderungen am Tank direkt im Blick zu haben.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Abnehmbares Anzeige- und Bedienmodul (106) für ein Messgerät (100), aufweisend:
eine Benutzerschnittstelle zum Eingeben von Parametrierdaten durch einen Benutzer;
eine Anzeige zum Anzeigen von Anzeigedaten des Messgeräts;
einen Energiespeicher (105), eingerichtet zur Energieversorgung des Anzeige- und Bedienmoduls, wenn das Anzeige- und Bedienmodul vom Messgerät entfernt ist;
eine drahtgebundene Energieversorgungsschnittstelle (107), eingerichtet zur Energieversorgung des Anzeige- und Bedienmoduls durch das Messgerät, wenn das Anzeige- und Bedienmodul auf das Messgerät aufgesetzt oder darin angeordnet ist;
eine Funkschnittstelle (108), eingerichtet zur drahtlosen Kommunikation mit dem Messgerät, zum Empfangen der Anzeigedaten von dem Messgerät und zum Übertragen der Parametrierdaten an das Messgerät und/oder
eine Steuerschaltung (110), welche eingerichtet ist, dass die Parametrierdaten im Anzeige- und Bedienmodul zwischengespeichert werden und erst beim Wiederverbinden des Anzeige- und/oder Bedienmoduls mit dem Messgerät in dieses übertragen und dort gespeichert werden, wobei das Wiederverbinden bedeutet, dass das Anzeige- und Bedienmodul auf das Messgerät aufgesetzt oder darin angeordnet ist.

2. Abnehmbares Anzeige- und Bedienmodul (106) nach Anspruch 1, weiter aufweisend:
eine Steuerschaltung (110), eigerichtet zur Unterbindung einer Energieversorgung des Anzeige- und Bedienmoduls durch den Energiespeicher (105), wenn das Anzeige- und Bedienmodul auf das Messgerät aufgesetzt oder darin angeordnet ist.

3. Abnehmbares Anzeige- und Bedienmodul (106) nach Anspruch 1 oder 2, weiter aufweisend:
eine drahtgebundene Kommunikationsschnittstelle (107), eingerichtet zur drahtgebundenen Kommunikation mit dem Messgerät, zum Empfangen von Anzeigedaten von dem Feldgerät und zum Übertragen von Parametrierdaten an das Messgerät, wenn das Anzeige- und Bedienmodul auf das Messgerät aufgesetzt oder darin angeordnet ist.

4. Abnehmbares Anzeige- und Bedienmodul (106) nach Anspruch 3,
wobei die drahtgebundene Kommunikationsschnittstelle (107) der Energieversorgungsschnittstelle (107) entspricht.

5. Abnehmbares Anzeige- und Bedienmodul (106) nach einem der vorherigen Ansprüche,
wobei das Anzeige- und Bedienmodul ausschließlich zur Nahbereichskommunikation eingerichtet ist.

6. Abnehmbares Anzeige- und Bedienmodul (106) nach einem der vorherigen Ansprüche,
wobei das Anzeige- und Bedienmodul zur drahtlosen Kommunikation mit einem weiteren Messgerät, zum Empfangen von Anzeigedaten von dem weiteren Messgerät und zum Übertragen von Parametrierdaten an das weitere Messgerät eingerichtet ist.

7. Messgerät (100) mit einem abnehmbaren Anzeige- und Bedienmodul (106) nach einem der vorherigen Ansprüche.

8. Messgerät (100) nach Anspruch 7, weiter aufweisend:
eine Öffnung (111) zur Aufnahme des Anzeige- und Bedienmoduls (106).

9. Messgerät (100) nach Anspruch 7 oder 8, weiter aufweisend:
einen Feldgerätedeckel (104), eingerichtet zur Aufnahme des Anzeige- und Bedienmoduls (106).

10. Messgerät (100) nach einem der Ansprüche 7 bis 9, eingerichtet als Füllstandmessgerät, Druckmessgerät, Grenzstandsensor oder Durchflussmessgerät.

11. Verwendung eines abnehmbaren Anzeige- und Bedienmoduls (106) nach einem der Ansprüche 1 bis 6 zur drahtlosen Bedienung eines Feldgeräts (100) oder Messgeräts und zur drahtgebundenen Energieversorgung durch das Feldgerät (100) oder Messgerät.

## Claims

1. Detachable display and operating module (106) for a measuring device (100), comprising:
a user interface for entering parameterization data by a user;
a display for showing display data of the measuring device;
an energy storage device (105) configured to supply energy to the display and operating module when the display and operating module is removed from the measuring device;
a wired power supply interface (107) arranged to supply power to the display and operating module by the measuring device when the display and operating module is placed on or arranged in the measuring device.;
a radio interface (108) configured for wireless communication with the measuring device, for receiving the display data from the measuring device and for transmitting the parameterization data to the measuring device and/or
a control circuit (110), which is configured so that the parameterization data is temporarily stored in the display and operating module and are only transferred to and stored in the measuring device when the display and/or operating module is reconnected to it,
wherein the reconnection meaning that the display and operating module is placed on or arranged in the measuring device.

2. Detachable display and operating module (106) according to claim 1, further comprising:
a control circuit (110) configured to inhibit a power supply to the display and operating module from the energy storage device (105) when the display and operating module is placed on or arranged in the measuring device..

3. Detachable display and operating module (106) according to claim 1 or 2, further comprising:
a wired communication interface (107) configured for wired communication with the measuring device, for receiving display data from the field device, and for transmitting parameterization data to the measuring device when the display and operating module is placed on or arranged in the measuring device..

4. Detachable display and operating module (106) according to claim 3,
wherein the wired communication interface (107) corresponds to the power supply interface (107).

5. Detachable display and operating module (106) according to any one of the preceding claims,
wherein the display and operating module is configured exclusively for short-range communication.

6. Detachable display and operating module (106) according to any one of the preceding claims,
wherein the display and operating module is configured for wireless communication with a further measuring device, for receiving display data from the further measuring device and for transmitting parameterization data to the further measuring device.

7. Measuring device (100) comprising a detachable display and operating module (106) according to any one of the preceding claims.

8. Measuring device (100) according to claim 7, further comprising:
an opening (111) for receiving the display and operating module (106).

9. Measuring device (100) according to claim 7 or 8, further comprising:
a field device cover (104) configured to receive the display and operating module (106).

10. Measuring device (100) according to any one of claims 7 to 9, configured as a level measuring device, pressure measuring device, point level sensor or flow measuring device.

11. Use of a detachable display and operating module (106) according to any one of claims 1 to 6
for wireless operation of a field device (100) or measuring device and
for wired power supply by the field device (100) or measuring device.

## Revendications

1. Module d'affichage et de contrôle amovible (106) pour un appareil de mesure (100), présentant :
une interface utilisateur pour l'entrée de données de paramétrage par un utilisateur ;
un afficheur pour afficher des données d'affichage de l'appareil de mesure ;
un accumulateur d'énergie (105), conçu pour alimenter en énergie le module d'affichage et de contrôle lorsque le module d'affichage et de contrôle est éloigné de l'appareil de mesure ;
une interface d'alimentation en énergie filaire (107), conçue pour alimenter en énergie le module d'affichage et de contrôle par l'appareil de mesure lorsque le module d'affichage et de contrôle est posé sur l'appareil de mesure ou disposé dans celui-ci ;
une interface radio (108), conçue pour la communication sans fil avec l'appareil de mesure, pour la réception des données d'affichage de l'appareil de mesure et pour la transmission des données de paramétrage à l'appareil de mesure et/ou
un circuit de commande (110), qui est conçu de telle sorte que les données de paramétrage sont stockées temporairement dans le module d'affichage et de contrôle et ne sont transmises à l'appareil de mesure et stockées dans celui-ci que lors de la reconnexion du module d'affichage et/ou de contrôle à l'appareil de mesure, la reconnexion signifiant que le module d'affichage et de contrôle est posé sur l'appareil de mesure ou disposé dans celui-ci.

2. Module d'affichage et de contrôle amovible (106) selon la revendication 1, présentant en outre :
un circuit de commande (110), conçu pour empêcher l'alimentation en énergie du module d'affichage et de contrôle par l'accumulateur d'énergie (105) lorsque le module d'affichage et de contrôle est posé sur l'appareil de mesure ou disposé dans celui-ci.

3. Module d'affichage et de contrôle amovible (106) selon la revendication 1 ou 2, présentant en outre :
une interface de communication filaire (107), conçue pour la communication filaire avec l'appareil de mesure, pour la réception de données d'affichage de l'appareil de terrain et pour la transmission de données de paramétrage à l'appareil de mesure lorsque le module d'affichage et de contrôle est posé sur l'appareil de mesure ou disposé dans celui-ci.

4. Module d'affichage et de contrôle amovible (106) selon la revendication 3,
dans lequel l'interface de communication filaire (107) correspond à l'interface d'alimentation en énergie (107).

5. Module d'affichage et de contrôle amovible (106) selon l'une des revendications précédentes,
dans lequel le module d'affichage et de contrôle est conçu exclusivement pour la communication à courte portée.

6. Module d'affichage et de contrôle amovible (106) selon l'une des revendications précédentes,
dans lequel le module d'affichage et de contrôle est conçu pour la communication sans fil avec un autre appareil de mesure, pour la réception de données d'affichage de l'autre appareil de mesure et pour la transmission de données de paramétrage à l'autre appareil de mesure.

7. Appareil de mesure (100) comprenant un module d'affichage et de contrôle amovible (106) selon l'une des revendications précédentes.

8. Appareil de mesure (100) selon la revendication 7, présentant en outre :
une ouverture (111) pour la réception du module d'affichage et de contrôle (106).

9. Appareil de mesure (100) selon la revendication 7 ou 8, présentant en outre :
un couvercle d'appareil de terrain (104), conçu pour recevoir le module d'affichage et de contrôle (106).

10. Appareil de mesure (100) selon l'une des revendications 7 à 9, conçu comme un appareil de mesure de niveau de remplissage, un appareil de mesure de pression, un capteur de niveau limite ou un appareil de mesure de débit.

11. Utilisation d'un module d'affichage et de contrôle amovible (106) selon l'une des revendications 1 à 6 pour le contrôle sans fil d'un appareil de terrain (100) ou d'un appareil de mesure et pour l'alimentation en énergie filaire par l'appareil de terrain (100) ou l'appareil de mesure.
